# EUROPEAN PATENT SPECIFICATION

(11) **EP 1 351 853 B1**
(45) Date of publication and mention of the grant of the patent: **15.06.2005**
(21) Application number: 01994957.7
(22) Date of filing: 27.12.2001
(51) Int. Cl.: B62J 1/02, B62J 1/26

(54) **IMPROVED SADDLE CONSTRUCTION FOR BICYCLES AND MOTORCYCLES**
VERBESSERTE SATTELKONSTRUKTION FÜR FAHRRÄDER UND MOTORRÄDER
SELLE POUR CYCLES ET MOTOCYCLES DE MEILLEURE CONCEPTION

(30) Priority: 16.01.2001 IT MI20010073
(43) Date of publication of application: 15.10.2003
(73) Proprietor: SELLE ITALIA S.R.L., 36028 Rossano Veneto (IT)
(72) Inventor: BIGOLIN, Guiseppe, I-36028 Rossano Veneto (IT)
(74) Representative: Cicogna, Franco
(86) International application number: PCT/IT2001/000654
(87) International publication number: WO 2002/055366

(56) References cited:
- DE-A- 4 005 565
- US-A- 4 611 851
- US-A- 5 203 606

## Description

### BACKGROUND OF THE INVENTION

The present invention relates to an improved saddle construction, specifically designed for bicycles and motorcycles.

As is known, a bicycle saddle must have a rigid construction, in order to resist against forces applied thereon, but, in the meanwhile, it must be able of absorbing impacts deriving from the ground surface.

Thus, such a saddle must have a sufficiently rigid construction to properly balance the impact forces exerted against the ischiatic bones of the user, and, in the meanwhile, it must also be sufficiently soft in order to provide the user with a comfort as high as possible.

Another problem affecting a proper designing of a bicycles saddle, is that of properly distributing the user weight bearing points or regions, from a mere anatomic standpoint.

An example of a saddle construction is shown in DEA4005565.

### SUMMARY OF THE INVENTION

Accordingly, the aim of the present invention is to provide such a saddle construction which is greatly improved with respect to conventional like saddles.

Within the scope of the above mentioned aim, a main object of the present invention is to provide such a saddle construction which is specifically designed to provide very good stability features, and a very good damping against forces exerted thereon.

Another object of the present invention is to provide such a saddle construction which is very comfortable for a user supported thereby.

According to one aspect of the present invention, the above mentioned aim and objects, as well as yet other objects, which will become more apparent hereinafter, are achieved by an improved saddle construction, specifically designed for bicycles, and being characterized as in claim 1.

Between the top saddle shell and bottom saddle shell is arranged a cushion element designed for operating as a damper at least at the central and rear portions of the saddle body.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative example, in the accompanying drawings, where:
Figure 1 is a longitudinally cross sectioned side elevation view of a saddle construction including a cushion element according to the present invention;
Figure 2 is a view similar to figure 1, illustrating a saddle construction including a cushion element filled by a fluid, according to the present invention; and

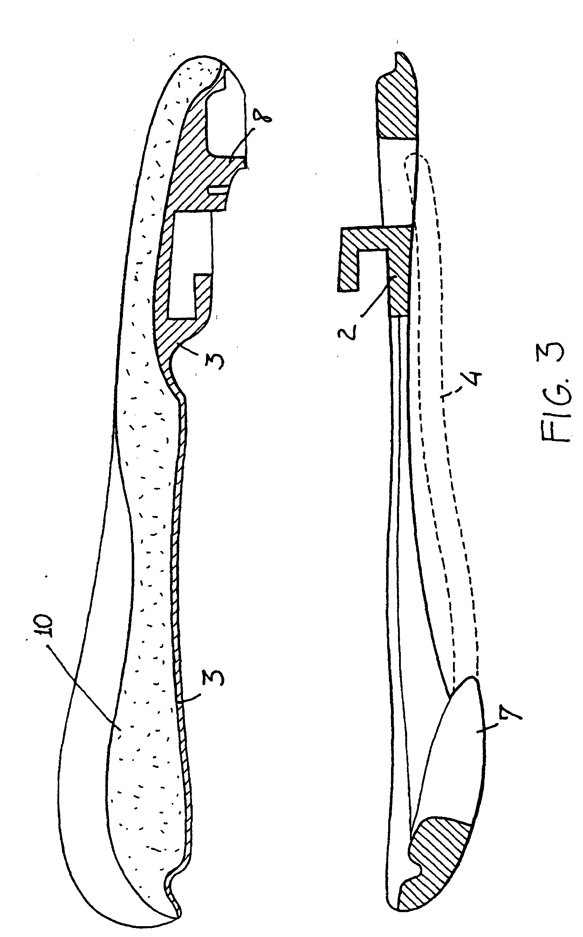

Figure 3 is an exploded side elevation view, as longitudinally cross-sectioned, of a saddle construction including a cushion element according to the invention.

### DESCRIPTION OF THE PREFERED EMBODIMENTS

With reference to the number references of the above mentioned figures, the saddle construction according to the present invention, which has been generally indicated by the reference number 1, comprises a top saddle shell 3, coupled to a bottom saddle shell 2, and a supporting saddle framework 4, which can be coupled to the body or frame of a bicycle.

The two shells 2 and 3 are coupled to one another, by a plug-in assembly 5, thereby the top shell can be displaced with respect to the bottom shell, while being cushioned at the rear portion thereof and fixed, at the front portion thereof, to the bottom shell.

Between the top shell 3 and bottom shell 2 is arranged a cushion element 9 operating as a damper at the central and rear portions of the sitting part of the saddle.

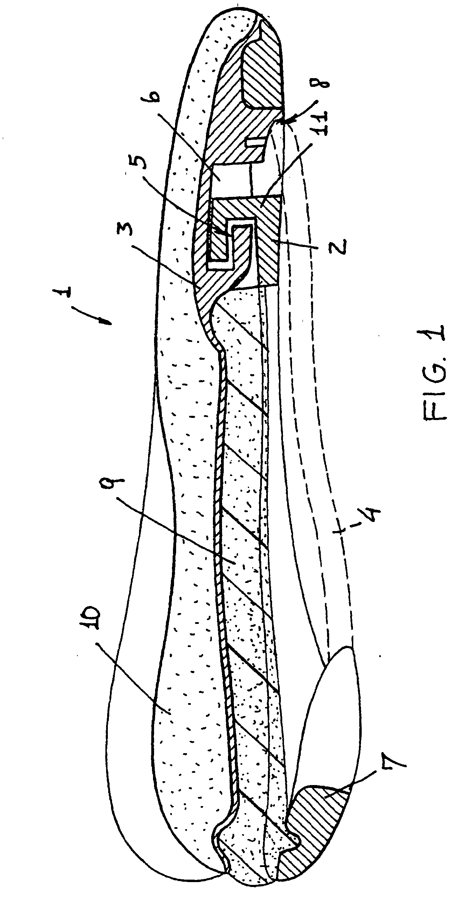

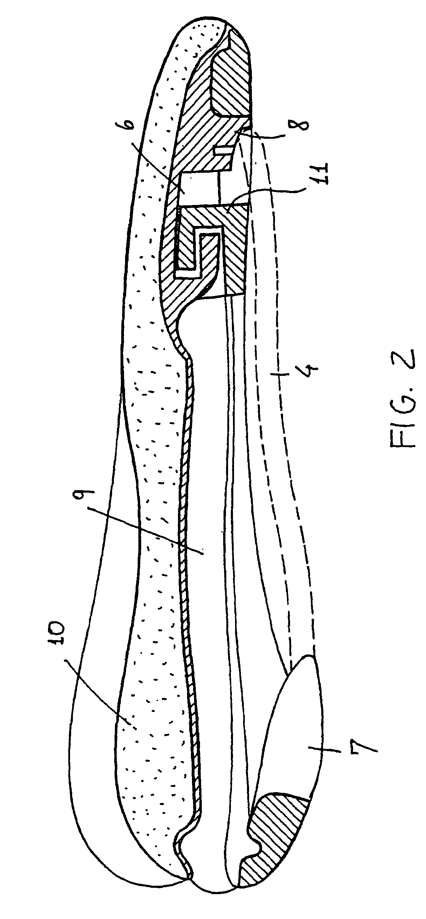

More specifically, the cushion element 9 can have a solid construction, as in the embodiment shown in figure 1, or it can also have a hollow construction and can be filled-in by any desired suitable fluid, such as a liquid or gas, or air, as in the exemplary embodiment shown in figure 2, according to the cushioning effect to be achieved.

According to a further feature of the invention, the cushion element 9 can preferably be transparent or clear, or it can be decorated on its outside, and can held in its inside decorated, printed upon or floating elements.

The plug-in assembly 5 comprises an housing or casing 6 which can include a polyurethane plug-in element, not specifically shown, designed for preventing the two shells from sliding with respect to one another, and for absorbing excessive loads, such as twisting and compression loads, which would reduce the mechanical strength of the force loading fulcrum 11.

The assembly, including the two shells is moreover affixed and held under tension by the framework 4 which, at its rear portion 7 engages in said bottom shell 2 and, at its front portion 8, engages in said top shell 3.

The saddle construction can comprise moreover a padding 10, including a polyurethane material or any other suitable material, designed for providing a good sitting comfort, and being coated by a suitable coating material such as leather or the like, as is known per se.

It has been found that the invention fully achieves the intended aim and objects.

In practicing the invention, the used materials, as well as the contingent size and shapes, can be any; depending on requirements and the status of the art.

## Claims

1. A saddle construction (1), for bicycles and motorcycles, said saddle construction defining a sitting body, and comprising a saddle framework (4), a saddle top shell (3) and a saddle bottom shell (2), **characterized in that** said framework has a rear portion (7) engaging in said bottom shell (2) and a front portion (8) engaging in said top shell (3) so as to clamp to one another said top (3) and bottom (2) shells to hold them under tension and that between said top shell (3) and bottom shell (2), as clamped by said framework, being arranged a cushion element (9) adapted to cushion at least the central portion and rear portion of the sitting body of the saddle construction.

2. A saddle construction, according to Claim 1, **characterized in that** said cushion element (9) is either a solid or hollow cushion element, and, as it is hollow, it can be filled in by a filling fluid such as a liquid or gas.

3. A saddle construction, according to Claims 1 or 2, **characterized in that** said saddle top (3) and bottom (2) shells are coupled to one another by a plug-in assembly (5), so as to allow said top shell (3) to be displaced and cushioned at the rear portion thereof, while being fixed, at the front portion thereof, to said bottom shell (2).

4. A saddle construction, according to one or more of the preceding claims, **characterized in that** said coupling plug-in assembly (5) is designed for preventing said top (3) and bottom (2) shells to slide with respect to one another, and absorbing twisting and pressing loads operating on said saddle construction.

5. A saddle construction, according to one or more of the preceding claims, **characterized in that** said plug-in assembly (5) comprises a casing (6) in which is engaged a polyurethane insert element.

## Patentansprüche

1. Sattelkonstruktion (1) für Fahrräder und Motorräder, wobei diese Sattelkonstruktion einen Sitzkörper definiert und ein Sattelgestell (4), eine obere Sattelschale (3) und eine untere Sattelschale (2) umfasst, **dadurch gekennzeichnet, dass** dieses Gestell einen hinteren Teil (7), der in dieser unteren Schale (2) in Eingriff ist, und einen vorderen Teil (8), der in dieser oberen Schale (3) in Eingriff ist, hat, um diese oberen (3) und unteren (2) Schalen aneinander festzuklemmen, um sie unter Spannung zu halten und, dass zwischen dieser oberen Schale (3) und unteren Schale (2), wie durch dieses Gestell festgeklemmt, ein Kissenelement (9) angeordnet ist, das angepasst ist, um mindestens den zentralen Teil und hinteren Teil des Sitzkörpers der Sattelkonstruktion zu polstern.

2. Sattelkonstruktion nach Anspruch 1, **dadurch gekennzeichnet, dass** dieses Kissenelement (9) entweder ein massives oder ein hohles Kissenelement ist, und, wenn es hohl ist, mit einer Füllflüssigkeit wie beispielsweise einer Flüssigkeit oder einem Gas ausgefüllt werden kann.

3. Sattelkonstruktion nach Anspruch 1 oder 2, **dadurch gekennzeichnet, dass** diese oberen (3) und unteren (2) Sattelschalen durch eine Einsteckanordnung (5) aneinander gekoppelt sind, um es dieser oberen Schale (3) zu ermöglichen, verlagert und am hinteren Teil davon gepolstert zu werden, während sie, am vorderen Teil davon, an dieser unteren Schale (2) befestigt ist.

4. Sattelkonstruktion nach einem oder mehreren der vorhergehenden Ansprüche, **dadurch gekennzeichnet, dass** diese Kopplungseinsteckanordnung (5) gestaltet ist, um zu verhindern, dass diese oberen (3) und unteren (2) Schalen in Bezug aufeinander gleiten und, um drehende und drückende Belastungen, die auf diese Sattelkonstruktion einwirken, zu absorbieren.

5. Sattelkonstruktion nach einem oder mehreren der vorhergehenden Ansprüche, **dadurch gekennzeichnet, dass** diese Einsteckanordnung (5) ein Gehäuse (6) umfasst, in welchem ein Polyurethan-Einsatzelement in Eingriff ist.

## Revendications

1. Construction de selle (1) pour cycles et motocycles, ladite construction de selle définissant un corps d'assise, et comprenant une ossature de selle (4), une enveloppe supérieure de selle (3) et une enveloppe inférieure de selle (2), **caractérisée en ce que** ladite ossature a une partie arrière (7) qui s'engage dans ladite enveloppe inférieure (2) et une partie avant (8) qui s'engage dans ladite enveloppe supérieure (3) de façon à fixer ensemble lesdites enveloppes supérieure (3) et inférieure (2) pour les tenir sous tension et à ce que entre ladite enveloppe supérieure (3) et l'enveloppe inférieure (2), fixées par ladite ossature, est agencé un élément formant un coussin (9) adapté pour rembourrer au moins la partie centrale et la partie arrière du corps d'assise de la construction de selle.

2. Construction de selle, selon la revendication 1, **caractérisée en ce que** ledit élément formant un coussin (9) est un élément de coussin plein ou creux, et, s'il est creux, il peut être rempli d'un fluide de remplissage tel qu'un liquide ou un gaz.

3. Construction de selle, selon les revendications 1 ou 2, **caractérisée en ce que** lesdites enveloppes supérieure (3) et inférieure (2) de selle sont accouplées entre elles par un assemblage enfichable (5) afin de permettre à ladite enveloppe supérieure (3) d'être déplacée et rembourrée à la partie arrière, tout en étant fixée à la partie avant à ladite enveloppe inférieure (2).

4. Construction de selle, selon une ou plusieurs des précédentes revendications, **caractérisée en ce que** ledit assemblage enfichable d'accouplement (5) est conçu de façon à empêcher lesdites enveloppes supérieure (3) et inférieure (2) de glisser l'une par rapport à l'autre, et de façon à absorber les charges de torsion et de compression agissant sur ladite construction de selle.

5. Construction de selle, selon une ou plusieurs des précédentes revendications, **caractérisée en ce que** ledit assemblage enfichable (5) comprend un logement (6) dans lequel est engagé un insert en polyuréthane.
